Europäisches Patentamt

European Patent Office

Office européen des brevets

(19)

(11) **EP 1 467 353 A1**

(12) **EUROPEAN PATENT APPLICATION**
published in accordance with Art. 158(3) EPC

(43) Date of publication:
**13.10.2004 Bulletin 2004/42**

(51) Int Cl.[7]: **G11B 7/0045**

(21) Application number: **03700541.0**

(22) Date of filing: **10.01.2003**

(86) International application number:
**PCT/JP2003/000180**

(87) International publication number:
**WO 2003/063145 (31.07.2003 Gazette 2003/31)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **16.01.2002 JP 2002007707**

(71) Applicant: **TDK Corporation**
**Chuo-ku, Tokyo 103-8272 (JP)**

(72) Inventors:
• **KATO, Tatsuya, c/o TDK Corporation**
**Tokyo 103-8272 (JP)**
• **SHINGAI, Hiroshi, c/o TDK Corporation**
**Tokyo 103-8272 (JP)**
• **HIRATA, Hideki, c/o TDK Corporation**
**Tokyo 103-8272 (JP)**

(74) Representative: **HOFFMANN EITLE**
**Patent- und Rechtsanwälte**
**Arabellastrasse 4**
**81925 München (DE)**

(54) **METHOD FOR RECORDING INFORMATION ON OPTICAL RECORDING MEDIUM, OPTICAL RECORDING MEDIUM, AND INFORMATION RECORDER/REPRODUCER**

(57) The present invention relates to a method of recording information to an optical recording medium that can reduce the influence from heat caused when neighboring recording marks are formed and can prevent cross-talk and cross-erase of information. According to the present invention, when forming recording marks in the optical recording medium by projecting a pulse-modulated laser beam thereonto, since the recording powers of a top pulse and a last pulse are set to $Pw2$ lower than the recording power $Pw1$ of any of intermediate pulses and the width $T_{cl}$ of a cooling pulse is set to be equal to or wider than $1.0T$ wider than the width of a pulse of the recording power, it is possible to improve cooling efficiency when recording marks are formed, thereby decreasing thermal interference between recording marks and achieve high density recording and high data transfer rate.

FIG. 7

EP 1 467 353 A1

## Description

## BACKGROUND OF THE INVENTION

The present invention relates to a method of recording information to an optical recording medium, an optical recording medium and an information recording and reproducing apparatus, and particularly to a method of recording information to an optical recording medium, an optical recording medium and an information recording and reproducing apparatus that can improve cooling efficiency when recording marks are formed, thereby decreasing thermal interference between recording marks and preventing cross-talk and cross-erasing of data.

## DESCRIPTION OF THE PRIOR ART

Optical recording media typified by the CD and the DVD have been widely used as recording media for recording digital data, and a widely used data recording format is one wherein the lengths of recording marks along the track are modulated depending on the data to be recorded. For example, in a CD-RW, which is one type of optical recording medium whose data is user-rewritable, an EFM modulation format is used wherein recording marks of lengths corresponding to $3T$ to $11T$ (where $T$ is one clock cycle) are used to perform the recording of data. Further, in a DVD-RW, an 8,16 modulation format is used wherein recording marks of lengths corresponding to $3T$ to $11T$ and $14T$ are used to perform the recording of data.

When a recording mark is formed, a laser beam is shined along the tracks of the optical recording medium, thereby forming an amorphous region having a predetermined length in a recording layer included in the optical recording medium and the thus formed amorphous region is utilized as a recording mark. Other regions of the recording layer than the amorphous region are in crystalline phase.

Here, at the time of forming recording marks in optical recording media, rather than illuminating the optical recording medium with a laser beam having the same pulse width as the time corresponding to the length of the recording marks, typically a laser beam consisting of a number of pulse trains determined based on the type of recording mark to be formed is shined onto the optical recording medium to form recording marks of the stipulated length.

For example, when recording data onto a CD-RW as described above, a number of pulses equal to $n$-1 (where $n$ is the type of recording mark, taking a value of either 3 to 11) is continuously shined, and thus one of the recording marks having a length corresponding to $3T$ to $11T$ is formed. Accordingly, two pulses are used to form a recording mark with a length corresponding to $3T$, while ten pulses are used to form a recording mark with a length corresponding to $11T$.

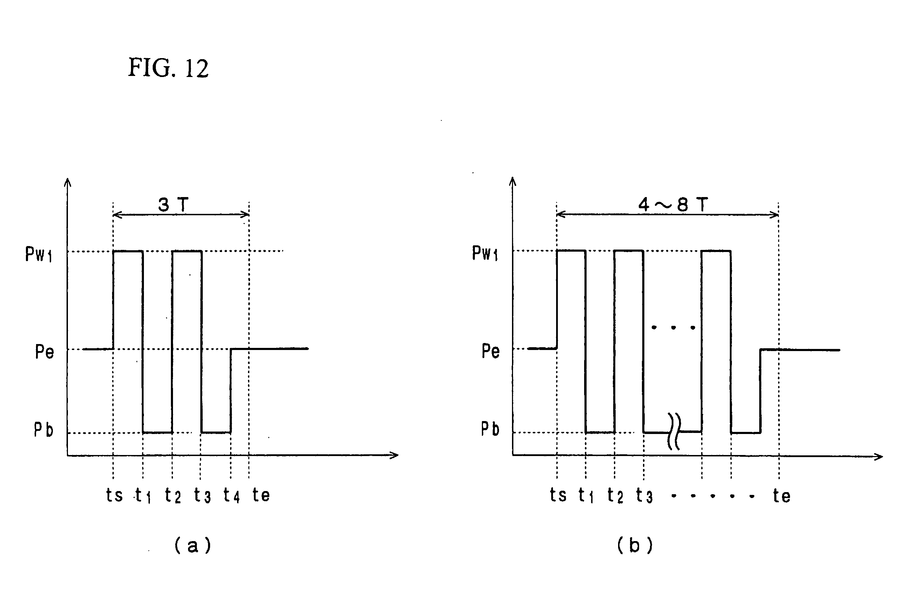

Figures 12 (a) and (b) are diagrams showing a conventional recording strategy in the case of forming recording marks of lengths corresponding to $3T$ to $11T$. As shown in Figure 12 (a), in the case of forming a recording mark of a length corresponding to $3T$, two pulses are supplied during the interval between the times $t_s$ and $t_e$ based on the pulse number defined by the number of times the power of the laser beam shined during recording is raised to a recording power $Pw$ and a cooling pulse whose power of the laser beam is lowered to a bottom power $Pb$ is then supplied. Similarly, in the case of forming one of record marks of lengths corresponding to $4T$ to $8T$, ($n$-1) pulses are supplied and the cooling pulse is then supplied. The recording power $Pw$ is set to a level at which a record mark can be formed even if thermal interference between recording marks is low. For example, it is set to 6.6 mW irrespective of the position of the pulse whose power of the laser beam is raised to the recording power $Pw$ among a top position, an intermediate position and a last position. Further, for example, an erasing power $Pe$ is set to 3.0 mW and a bottom power $Pb$ is set to 0.5 mW.

In recent years, it has become strongly desirable to achieve further increases in the capacity of information recorded in an optical recording medium and the recording velocity of information. The capacity of information recorded in an optical recording medium can be increased by narrowing the track pitch as much as possible. On the other hand, in order to increase the recording velocity of information, it is effective to increase the crystallization velocity of the recording film.

However, as the track pitch is set narrower in order to increase the capacity of information recorded in an optical recording medium, cross-talk and cross-erase of information increase. Further, in the case where the crystallization velocity of a phase change material recording film used for a recording layer is increased in order to increase the recording velocity of information, there is a tendency during recording of information for a region whose phase should be changed to the amorphous phase to be crystallized i.e., re-crystallization of the recording film tends to occur.

These problems cause the formation of recording marks having undesired length and shape and increase jitter of a reproduced signal. In some cases, it may become impossible to reproduce data.

In order to prevent the re-crystallization of a recording film, it is known to be effective to set the recording power ($Pw$) of the laser beam used for recording data high and the erasing power ($Pe$) of the laser beam low, thereby setting the ratio ($Pe/Pw$) of the recording power ($Pw$) and the erasing power ($Pe$) low. It is necessary to set the ratio ($Pe/Pw$) lower as the crystallizing velocity of a phase change material recording film increases, in other words, as the desired data transfer rate increases.

However, although it is necessary to use a high linear recording velocity in order to increase the data transfer rate up to 70 Mbps, for example, and record data, in the case where the recording power and the erasing power of a laser beam are increased to record data at high velocity, since the crystallization velocity of the phase change material film is high and the interval between periods during which the laser beam is projected onto the phase change material film is short, re-crystallization of the phase change material is liable to occur due to thermal interference. In particular, in the case where the shortest space between neighboring recording marks is equal to or shorter than 20 ns, the influence of thermal interference becomes extremely great.

## SUMMARY OF THE INVENTION

It is therefore an object of the present invention to provide a method of recording information to an optical recording medium, an optical recording medium and an information recording and reproducing apparatus that can improve cooling efficiency when recording marks are formed, thereby decreasing thermal interference between recording marks and preventing crosstalk and cross-erasing of data.

The above object of the present invention can be accomplished by a method of recording information to an optical recording medium to which information is recorded by projecting a pulse-modulated laser beam onto the optical recording medium and forming on the optical recording medium a plurality of recording marks selected from a group consisting of several types of recording marks each with different lengths, wherein: the method of recording information to an optical recording medium comprises a step of setting recording powers of a top pulse and/or a last pulse of a laser beam used for forming at least one recording mark contained within said group to a second recording power lower than a first recording power which is a recording power of an intermediate pulse(s) between the top pulse and the last pulse, thereby recording information in the optical recording medium.

According to the present invention, since the recording powers of the top pulse and/or the last pulse of the laser beam are set to be lower than the recording power of the intermediate pulse(s), the cooling effect when the recording mark is formed can be improved and the influence from heat caused when neighboring recording marks are formed can be reduced. Therefore, re-crystallization of the recording film can be suppressed and jitter can be decreased. Further, when the recording mark is formed on a particular track, the cross-erase of information recorded on neighboring tracks can be reduced. Accordingly, it is possible to further narrow the pitch of the tracks.

In a preferred aspect of the present invention, the recording powers of the top pulse and the last pulse are set at the same level.

According to this preferred aspect of the present invention, since it is sufficient to set the recording power of each pulse of the laser beam to one of two values, namely, the recording power $Pw2$ of the top pulse and the last pulse and the recording power $Pw1$ of the intermediate pulse(s), the recording strategy can be simplified.

In a further preferred aspect of the present invention, the first recording power $Pw1$ and the second recording power $Pw2$ are set so that $Pw2/Pw1$ is smaller than 0.9.

According to this preferred aspect of the present invention, since the first recording power $Pw1$ and the second recording power $Pw2$ are set so that $Pw2/Pw1$ is smaller than 0.9, the cooling effect when the recording mark is formed can be much improved and the influence from heat caused when neighboring recording marks are formed can be reduced. Therefore, re-crystallization of the recording film can be suppressed and jitter can be decreased. Further, when the recording mark is formed on a particular track, the cross-erase of information recorded on neighboring tracks can be much reduced. Accordingly, it is possible to further narrow the pitch of the tracks.

In a further preferred aspect of the present invention, a pulse width of a cooling pulse of the laser beam used for forming at least one recording mark contained within said group is set to wider than that of any pulse of the recording power.

According to this preferred aspect of the present invention, since the pulse width of the cooling pulse of the laser beam is set to wider than that of any pulse of the recording power, the influence from heat caused when neighboring recording marks are formed can be much reduced.

In a further preferred aspect of the present invention, the pulse width of the cooling pulse is set to be equal to or wider than 1.0 T.

According to this preferred aspect of the present invention, since the pulse width of the cooling pulse is set to be equal to or wider than 1.0 T, the influence from heat caused when neighboring recording marks are formed can be much reduced.

In a further preferred aspect of the present invention, a length of a shortest signal between the neighboring recording marks is equal to or shorter than 30 ns.

According to this preferred aspect of the present invention, it is possible to markedly reduce the influence from heat caused by forming neighboring recording marks which becomes particularly great when information is recorded at high data transfer rates. Specifically, since the length of the shortest signal between the neighboring recording marks is equal to or shorter than 30 ns, the cooling effect when the recording mark is formed can be much improved and the influence from heat caused when neighboring recording marks are formed can be reduced. Therefore, re-crystallization of a recording film can be suppressed and jitter can be decreased. Further, when the recording mark is formed on a particular track, the cross-erase of information recorded on neighboring tracks can be much reduced. Accordingly, it is possible to further narrow the pitch of the tracks.

In a further preferred aspect of the present invention, the length of the shortest signal between the neighboring recording marks is equal to or shorter than 20 ns.

According to this preferred aspect of the present invention, it is possible to markedly reduce the influence from heat caused by forming neighboring recording marks which becomes particularly great when information is recorded at high data transfer rates. Specifically, since the length of the shortest signal between the neighboring recording marks is equal to or shorter than 20 ns, the cooling effect when the recording mark is formed can be much improved and the influence from heat caused when neighboring recording marks are formed can be reduced. Therefore, the re-crystallization of a recording film can be suppressed and jitter can be decreased. Further, when the recording mark is formed on a particular track, the cross-erase of information recorded on neighboring tracks can be much reduced. Accordingly, it is possible to further narrow the pitch of the tracks.

The above object the of the present invention can be also accomplished by an optical recording medium comprising at least a recording layer to which information is recorded by projecting a pulse-modulated laser beam thereonto and forming thereon a plurality of recording marks selected from a group consisting of several types of recording marks each with different lengths, wherein: the optical recording medium comprises information required to set recording powers of a top pulse and/or a last pulse of a laser beam used for forming at least one recording mark contained within said group to a second recording power lower than a first recording power which is a recording power of an intermediate pulse(s) between the top pulse and the last pulse and record the information therein.

According to the present invention, since the optical recording medium comprises information required to set the recording powers of the top pulse and/or the last pulse of the laser beam to be lower than the recording power of the intermediate pulse(s), the cooling effect when the recording mark is formed can be improved and the influence from heat caused when neighboring recording marks are formed can be reduced. Therefore, the re-crystallization of a recording film can be suppressed and jitter can be decreased. Further, when the recording mark is formed on a particular track, the cross-erase of information recorded on neighboring tracks can be reduced. Accordingly, it is possible to further narrow the pitch of the tracks.

In a preferred aspect of the present invention, the optical recording medium further comprises information required to set the recording powers of the top pulse and the last pulse at the same level and record the information therein.

According to this preferred aspect of the present invention, since it is sufficient to set the recording power of each pulse of the laser beam to one of two values, namely, the recording power $Pw2$ of the top pulse and the last pulse and the recording power $Pw1$ of the intermediate pulse(s), the recording strategy can be simplified.

In a further preferred aspect of the present invention, the optical recording medium further comprises information required to set the first recording power $Pw1$ and the second recording power $Pw2$ so that $Pw2/Pw1$ is smaller than 0.9.

According to this preferred aspect of the present invention, since the optical recording medium further comprises information required to set the first recording power $Pw1$ and the second recording power $Pw2$ so that $Pw2/Pw1$ is smaller than 0.9, the cooling effect when the recording mark is formed can be much improved and the influence from heat caused when neighboring recording marks are formed can be reduced. Therefore, the re-crystallization of a recording film can be suppressed and jitter can be decreased. Further, when the recording mark is formed on a particular track, the cross-erase of information recorded on neighboring tracks can be much reduced. Accordingly, it is possible to further narrow the pitch of the tracks.

The above object the of the present invention can be also accomplished by an information recording and reproducing apparatus that records information by projecting a pulse-modulated laser beam onto an optical recording medium and forming on the optical recording medium a plurality of recording marks selected from a group consisting of several types of recording marks each with different lengths, thereby recording information in the optical recording medium wherein: the information recording and reproducing apparatus comprises at least optical means for projecting the laser beam onto the optical recording medium and laser drive means for supplying a laser drive signal for controlling the laser beam, the laser drive means being adapted to supply a laser drive signal to set recording powers of a top pulse and/or a last pulse of a laser beam used for forming at least one recording mark contained within said group to a second recording power lower than a first recording power which is a recording power of an intermediate pulse(s) between the top pulse and the last pulse.

According to the present invention, since the recording powers of the top pulse and/or the last pulse of the laser beam are set to be lower than the recording power of the intermediate pulse(s), the cooling effect when the recording mark is formed can be improved and the influence from heat caused when neighboring recording marks are formed can be reduced. Therefore, the re-crystallization of a recording film can be suppressed and jitter can be decreased. Further, when the recording mark is formed on a particular track, the cross-erase of information recorded on neighboring tracks can be reduced. Accordingly, it is possible to further narrow the pitch of the tracks.

In a preferred aspect of the present invention, the recording powers of the top pulse and the last pulse are set at the same level.

According to this preferred aspect of the present invention, since it is sufficient to set the recording power of each pulse of the laser beam to one of two values, namely, the recording power $Pw2$ of the top pulse and the last pulse and the recording power $Pw1$ of the intermediate pulse(s), the recording strategy can be simplified.

In a further preferred aspect of the present invention, the first recording power $Pw1$ and the second recording power $Pw2$ are set so that $Pw2/Pw1$ is smaller than 0.9.

According to this preferred aspect of the present invention, since the first recording power $Pw1$ and the second recording power $Pw2$ are set so that $Pw2/Pw1$ is smaller than 0.9, the cooling effect when the recording mark is formed can be much improved and the influence from heat caused when neighboring recording marks are formed can be reduced. Therefore, the re-crystallization of a recording film can be suppressed and jitter can be decreased. Further, when the recording mark is formed on a particular track, the cross-erase of information recorded on neighboring tracks can be much reduced. Accordingly, it is possible to further narrow the pitch of the tracks.

**BRIEF DESCRIPTION OF THE DRAWINGS**

Figure 1 is a schematic drawing of the major components of an information recording and reproducing apparatus according to a preferred embodiment of the present invention.

Figure 2 is a flow chart showing operations conducted after an optical recording medium 1 is inserted into an information recording and reproducing apparatus according to a preferred embodiment of the present invention and the information recording and reproducing apparatus switches to standby.

Figure 3 is a cross-sectional view schematically showing the structure of an optical recording medium 1 that is a preferred embodiment of the present invention.

Figure 4 is a diagram illustrating the recording strategy in the case of forming a recording mark of a length corresponding to $2T$.

Figure 5 is a diagram illustrating the recording strategy in the case of forming a recording mark of a length corresponding to $3T$.

Figure 6 is a diagram illustrating the recording strategy in the case of forming a recording mark of a length corresponding to $4T$.

Figure 7 is a diagram illustrating the recording strategy in the case of forming a recording mark of a length corresponding to any one of $5T$ to $8T$.

Figure 8 is a graph showing jitter in the case of using the recording strategy according to a Working Example.

Figure 9 is a graph showing jitter in the case of using recording strategy according to a Working Example. Figures 10(a) and (b) are diagrams illustrating recording strategy which is another preferred embodiment of the present invention.

Figure 11 is a diagram illustrating recording strategy which is a further preferred embodiment of the present invention.

Figures 12(a) and (b) are diagrams showing conventional recording strategy in the case of forming recording marks of lengths corresponding to $3T$ to $11T$.

**DESCRIPTION OF THE PREFERRED EMBODIMENTS**

Preferred embodiments of the present invention will be explained in detail with reference to the drawings.

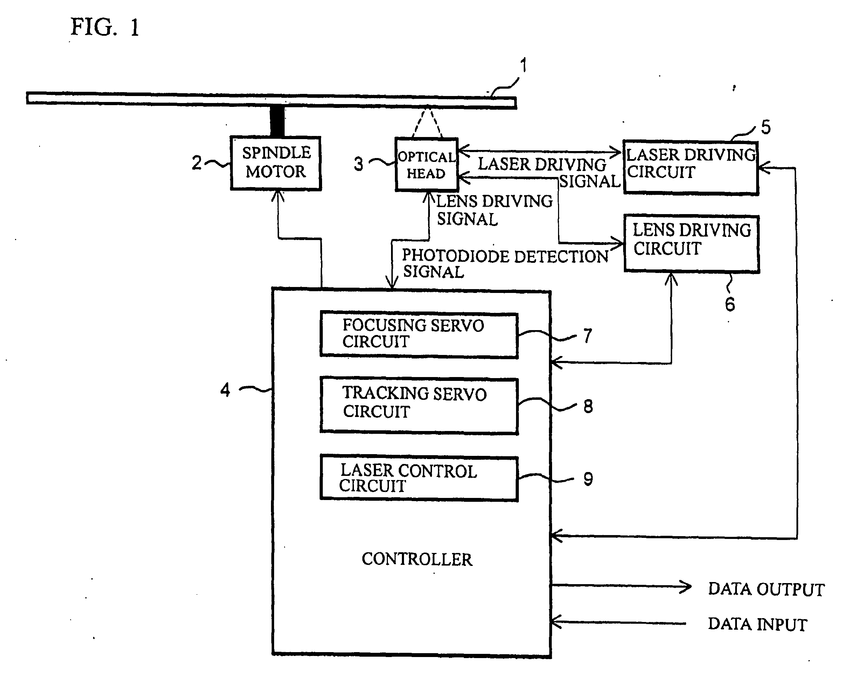

Figure 1 is a schematic drawing of the major components of an information recording and reproducing apparatus according to a preferred embodiment of the present invention.

As shown in Figure 1, the information recording and reproducing apparatus according to this embodiment is equipped with a spindle motor 2 for rotating an optical recording medium 1, an optical head 3 for shining a laser beam onto the optical recording medium 1, a controller 4 for controlling the operation of the spindle motor 2 and the optical head 3, a laser driving circuit 5 that supplies a laser driving signal to the optical head 3, and a lens driving circuit 6 that supplies a lens driving signal to the optical head 3.

In the information recording apparatus for recording information in an optical recording medium, the wavelength of the laser beam used for recording information is preferably equal to or shorter than 450 nm and particularly preferably 380 nm to 450 nm and the numerical aperture N.A. of the head 3 is preferably equal to or larger than 0.7, although the apparatus is not limited to these values.

Moreover, as shown in Figure 1, the controller 4 includes a focusing servo circuit 7, a tracking servo circuit 8, and a laser control circuit 9. When the focusing servo circuit 7 is activated, the focus is aligned with the recording surface of the rotating optical recording medium 1, and when the tracking servo circuit 8 is activated, the spot of the laser beam begins to automatically track the eccentric signal track of the optical recording medium 1. The focusing servo circuit 7 and tracking servo circuit 8 are provided with an auto gain control function for automatically adjusting the focusing gain and an auto gain control function for automatically adjusting the tracking gain, respectively. In addition, the laser control circuit 9 is a circuit that generates the laser driving signal supplied by the laser driving circuit 5, generates an appropriate laser driving signal based on recording condition setting information recorded on the optical recording medium 1 when data are to be recorded and generates a laser driving signal in accordance with the kind of an optical recording medium when data are to be reproduced so that the power of a laser beam is set to a predetermined power. When data are to be reproduced, the power of a laser beam is predetermined based reproducing condition setting information.

Here, the "recording condition setting information" refers to conditions required for recording data on the optical recording medium 1. In this embodiment, the recording condition setting information includes at least information required for determining the power of a laser beam used for recording data and recording strategy described later in detail. The recording condition setting information may include not only various conditions required to record data indicated specifically, but also the recording conditions may be identified by specifying one of several conditions stored in advance within the information recording and reproducing apparatus.

Note that the focusing servo circuit 7, tracking servo circuit 8 and laser control circuit 9 need not be circuits incorporated in the controller 4 but can instead be components separate of the controller 4. Moreover, they need not be physical circuits but can instead be accomplished by software programs executed in the controller 4. Further, the laser driving means is mainly constituted by the laser driving circuit 5 and the laser control circuit 9 of the controller 4.

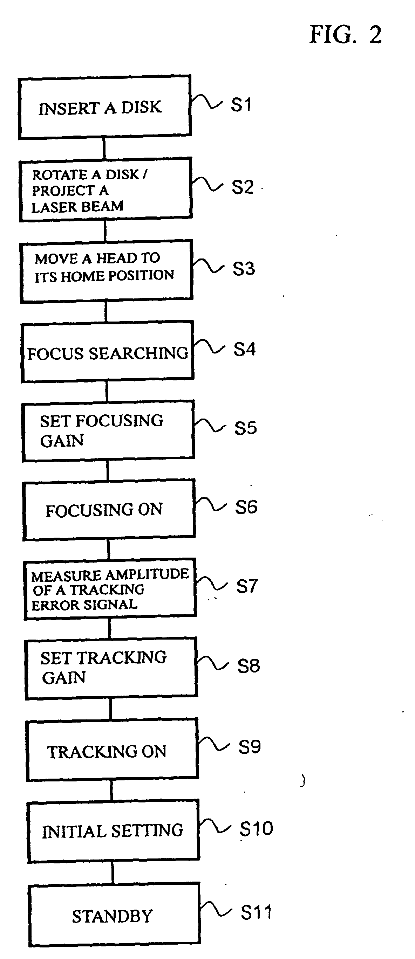

Figure 2 is a flow chart showing operations conducted after an optical recording medium 1 is inserted into the information recording and reproducing apparatus according to a preferred embodiment of the present invention and the information recording and reproducing apparatus switches to standby.

As shown in Figure 2, when the optical recording medium 1 is inserted into the information recording and reproducing apparatus according to this embodiment (Step S1), the controller 4 first drives the spindle motor 2, thereby rotating the optical recording medium 1 and simultaneously causes the laser driving circuit 5 to drive the head 3, thereby projecting a laser beam onto a recording surface of the optical recording medium 1 (Step S2). Then, the controller 4 causes the laser driving circuit 5 to return the head to its home position (Step 3).

Further, the controller 4 conducts focus searching operation, whereby a focus position is determined (Step 4). During the focus searching operation, the head 3 is moved perpendicularly to the recording surface of the optical recording medium 1 under the control of the lens driving circuit 6. The controller 4 then sets focusing gain (Step 5).

When the focus searching operation (Step 4) and the focusing gain setting operation (Step 5) have been completed in this manner, the controller 4 activates the focusing servo circuit 7. Namely, the controller 4 turns the focusing on (Step 6). As a result, the focus is aligned with the recording surface of the rotating optical recording medium 1. When the tracking servo circuit 8 is activated, the focusing gain is automatically adjusted by an auto gain control function.

Then, the controller 4 measures the amplitude of a tracking error signal (Step 7) and sets tracking gain (Step 8). The tracking gain is set (Step 8) by selecting an appropriate tracking gain based on the amplitude of the tracking error signal measured at Step 7.

When the tracking gain setting operation (Step 8) has been completed in this manner, the controller 4 activates the tracking servo circuit 8, namely, turns the tracking on. As a result, the spot of the laser beam begins to automatically track the eccentric track of the optical recording medium 1. When the tracking servo circuit 8 is activated, the tracking gain is automatically adjusted by an auto gain control function.

When the focusing servo circuit 7 and the tracking servo circuit 8 have been activated in this manner, the controller 4 conducts an initial setting operation by detecting address information, reading file registration information, reading the recording condition setting information and so on (Step 10) and the information recording apparatus switches to standby (Step 11). When the information recording apparatus switches to standby, it becomes ready to receive instructions from a user and when it is instructed by the user to record data under this state, for example, the information recording apparatus starts recording data.

Here follows a description of the structure of an optical recording medium according to the present embodiment.

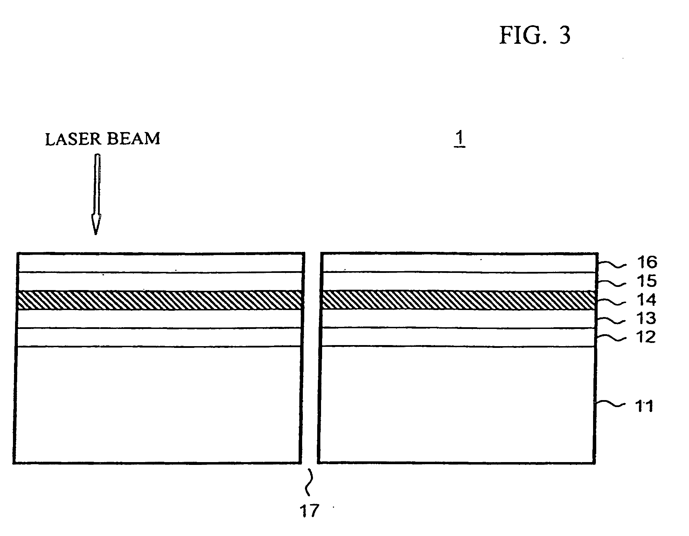

Figure 3 is a schematic cross section illustrating the structure of an optical recording medium 1 according to the present embodiment. As shown in Figure 3, the optical recording medium 1 consists of a substrate 11 with a thickness of approximately 1.1 mm, a reflective layer 12 with a thickness of approximately 10 to 300 nm, a second dielectric layer 13 with a thickness of approximately 10 to 50 nm, a recording layer 14 with a thickness of approximately 5 to 30 nm, a first dielectric layer 15 with a thickness of approximately 3 to 30 nm, and a light transmission layer 16 with a thickness of approximately 50 to 150 μm. In addition, a hole 17 is provided in the center of the optical recording medium 1. When recording data onto an optical recording medium with such a structure, the working distance (the distance between the objective lens used to focus the laser beam when data are reproduced and when data are recorded, which is a part of the optical head 3, and the surface of the optical recording medium 1) is set extremely short (e.g., approximately 80 to 150 μm), and thus a beam spot diameter much smaller than that in the past is achieved. With an optical recording medium 1 having such a structure, it is possible to achieve a high data capacity and a high data transfer rate. In addition, the recording condition setting information described above is recorded on the optical recording medium 1.

The recording layer 14 of the optical recording medium 1 is made up of a phase-change film that has a different reflectance in the crystalline phase from in the amorphous phase, and this property is utilized to record data. In order to enable data recording at a high transfer rate, it is necessary to constitute the recording layer 14 as a phase change material film having a higher crystallization velocity.

The unrecorded regions of the recording layer 14 are crystalline so their reflectance may be 20%, for example. To record some sort of data in such unrecorded regions, certain portions of the recording layer 14 depending on the data to be recorded are heated to a temperature in excess of the melting point and then rapidly cooled to change them into the amorphous state. The reflectance of the amorphous portions may become 7%, for example, assuming the state in which the stipulated data is recorded. Moreover, to overwrite data once it is recorded, the portions of the recording layer 14 that are recorded with data to be overwritten are heated to either above the crystallization temperature or above the melting point depending on the data to be recorded, thus changing it into the crystalline or amorphous state.

A recording power $Pw$ of the laser beam shined in order to melt the recording layer 14, a bottom power $Pb$ of the laser beam shined when cooling the recording layer 14 and an erasing power $Pe$ of the laser beam shined when crystallizing the recording layer 14 are set so as to have the following relationship:

$$Pw > Pe > Pb.$$

Accordingly, when recording data to the optical recording medium 1, the controller 4 controls the laser driving circuit 5 via the laser control circuit 9 so that the power of the laser beam assumes the values $Pw, Pe$ or $Pb$ based on the recording condition setting information read from the optical recording medium 1, and the laser driving circuit 5 controls the power of the laser driving signal based thereupon.

In this embodiment, in order to prevent the phase change material film forming the recording layer 14 from being re-crystallized, the recording power $Pw$ of the laser beam used for recording data is set to $Pw1$ or $Pw2$. Actual values of the recording power $Pw$ and the erasing power $Pe$ thereof can be set based on the crystallization velocity of the phase change material film forming the recording layer 14.

On the other hand, in the case where data recorded in the optical recording medium 1 are reproduced, the controller 4 controls the laser driving circuit 5 based on the kind of the optical recording medium 1 via the laser control circuit 9 so as to determine the power of the laser beam to be a reproducing power $Pr$ and the laser driving circuit 5 controls the power of a laser driving signal based on the thus determined reproducing power $Pr$. Here, the level of the reproducing power $Pr$ of the laser beam is determined sufficiently low so as to prevent the temperature of the recording layer 14 of the optical recording medium 1 from reaching the crystallization temperature of the phase change material film.

Here follows a description of the modulation code used in a method of recording information according to this embodiment. In the information recording method according to this preferred embodiment, the (1,7) RLL modulation code can be adopted. However, the application of the information recording method according to the present invention is not limited to the case in which this modulation code is used, but rather it is naturally applicable to cases in which another modulation code is used. Note that in this Specification, the method of shining the laser beam in order to form a recording mark, namely the number of pulses in the laser beam, pulse width of each pulse, pulse interval, pulse power and other settings are collectively called the "recording strategy."

In addition, the recording condition setting information incorporated into the optical recording medium 1 contains content for determining which recording strategy should be used to record data, so the information recording and reproducing apparatus shown in Figure 1 performs the recording of data with the recording strategy to be described in detail below based on this determination.

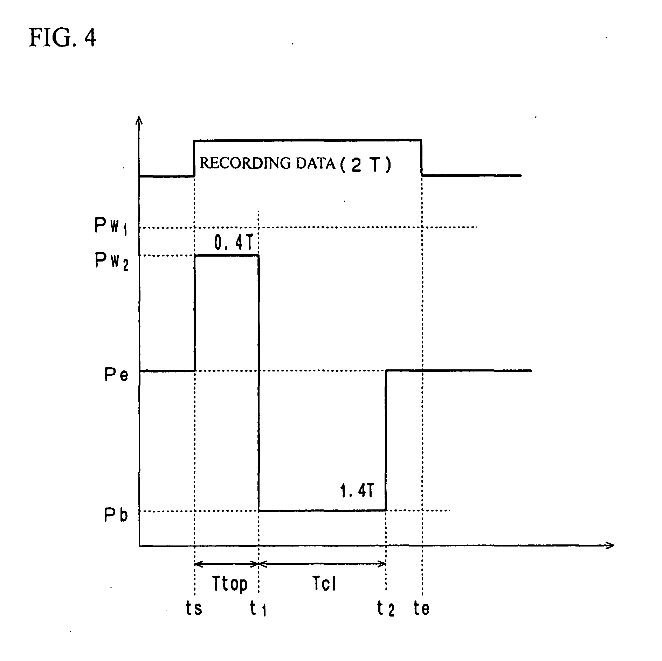

Next, examples of recording strategies will be explained in the case where the (1,7) RLL modulation code is adopted. Figures 4 to 7 are diagrams showing the recording strategy according to a preferred embodiment of the present invention.

Figure 4 is a diagram illustrating the recording strategy in the case of forming a recording mark of a length corresponding to 2$T$. As shown in Figure 4, when forming a recording mark of a length corresponding to 2$T$, the number of pulses in the laser beam is set to 1. Here, the number of pulses in the laser beam is defined by the number of times the power of the laser beam shined during recording is raised to $Pw$ ($Pw1$ or $Pw2$). More specifically, taking the time $t_s$ to be the timing at which the laser beam is positioned at the starting point of the recording mark and the time $t_e$ to be the timing at which the laser beam is positioned at the ending point of the recording mark, during the period from the time $t_s$ to the time $t_e$, the laser beam power is first set to $Pw2$ and then set to the power $Pb$.

Here, the laser beam power before the time $t_s$ is set to $Pe$ and the power of the laser beam begins to rise at the time $t_s$. In addition, the laser beam power at the time $t_e$ is set to $Pe$ or $Pb$.

Here, when the interval from time $t_s$ to time $t_1$ shown on Figure 4 is defined to be $T_{top(2T)}$ and the interval from time $t_1$ to time $t_2$ is defined to be $T_{cl(2T)}$, $T_{top(2T)}$ is set to about 0.4$T$ and $T_{cl(2T)}$ is set to about 1.4$T$.

During the interval $T_{top(2T)}$ (the heating inter-

val), the recording layer 14 of the optical recording medium 1 receives a large amount of energy and its temperature exceeds the melting point, and during the interval $T_{cl(2T)}$ (the cooling interval), the recording layer 14 of the optical recording medium 1 is rapidly cooled. Thereby, a recording mark of a length corresponding to 2T is formed in the recording layer 14 of the optical recording medium 1.

As shown in Figure 4, in the case of forming a recording mark of a length corresponding to 2T, the recording strategy includes only one pulse, so that when this pulse is defined to be a top pulse, no last pulse or intermediate pulse (described later) is included in the recording strategy. Further, the cooling interval $T_{cl}$ is defined as the width of a cooling pulse and is set to be slightly longer than $T_{top}$. The cooling interval $T_{cl}$ is preferably set to be equal to or longer than 1.0 T. Thus, since the width of the cooling pulse is set to be wider than that of a pulse of the recording power, the influence of thermal interference between itself and neighboring recording marks can be reduced and high density recording and high data transfer rate can be achieved.

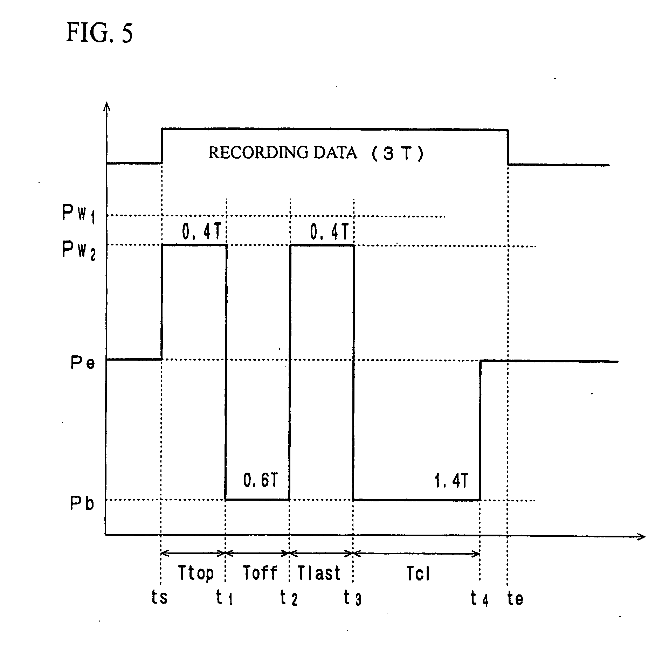

Figure 5 is a diagram illustrating the recording strategy in the case of forming a recording mark of a length corresponding to 3T. As shown in Figure 5, when forming a recording mark of a length corresponding to 3T, the number of pulses in the laser beam is set to **2.** More specifically, during the period from the time $t_s$ to the time $t_e$, the laser beam power is first set to $Pw2$ and then being set to the power $Pb$ is repeated twice.

Here, the laser beam power before the time $t_s$ is set to $Pe$ and the power of the laser beam begins to rise at the time $t_s$. In addition, the laser beam power at the time $t_e$ is set to $Pe$ or $Pb$.

Here, when the interval from time $t_s$ to time $t_1$ shown on Figure 5 is defined to be $T_{top(3T)}$, the interval from time $t_1$ to time $t_2$ is defined to be $T_{off(3T)}$, the interval from time $t_2$ to time $t_3$ is defined to be $T_{last(3T)}$, and the interval from time $t_3$ to time $t_4$ is defined to be $T_{cl(3T)}$, $T_{top(3T)}$ and $T_{last(3T)}$ are set to about 0.4T, $T_{off(3T)}$ is set to about 0.6T and $T_{cl(3T)}$ is set to about 1.4T.

During the interval $T_{top(3T)}$, $T_{off(3T)}$ and $T_{last(3T)}$ (the heating intervals), the recording layer 14 of the optical recording medium 1 receives a large amount of energy and its temperature exceeds the melting point, and during the interval $T_{cl(3T)}$ (the cooling interval), the recording layer 14 of the optical recording medium 1 is rapidly cooled. Thereby, a recording mark of a length corresponding to 3T is formed in the recording layer 14 of the optical recording medium 1.

As shown in Figure 5, in the case of forming a recording mark of a length corresponding to 3T, the recording strategy includes two pulses, so that when these pulses are defined to be a top pulse and a last pulse, no intermediate pulse (described later) is included in the recording strategy. Further, the cooling interval $T_{cl}$ is defined as the width of a cooling pulse and is set to be slightly longer than $T_{top}$. The cooling interval $T_{cl}$ is preferably set to be equal to or longer than 1.0 T. Thus, since the width of the cooling pulse is set to be wider than that of a pulse of the recording power, the influence of thermal interference between itself and neighboring recording marks can be reduced and high density recording and high data transfer rate can be achieved.

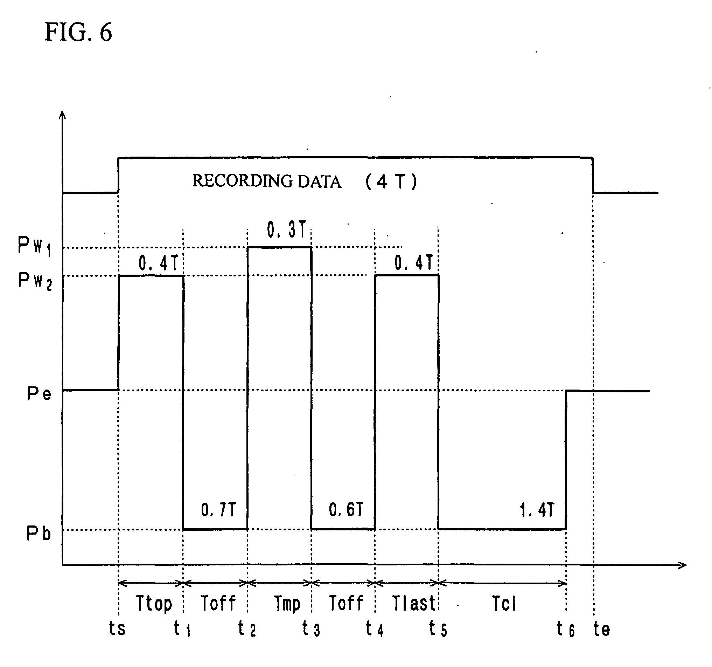

Figure 6 is a diagram illustrating the recording strategy in the case of forming a recording mark of a length corresponding to 4T. As shown in Figure 6, when forming a recording mark of a length corresponding to 4T, the number of pulses in the laser beam is set to 3. More specifically, during the period from the time $t_s$ to the time $t_e$, the set consisting of the combination of the laser beam power being first set to $Pw1$ or $Pw2$ and then being set to the power $Pb$ is repeated three times. Here, the laser beam power before the time $t_s$ is set to $Pe$ and the power of the laser beam begins to rise at the time $t_s$. In addition, the laser beam power at the time $t_e$ is set to $Pe$ or $Pb$.

Here, when the interval from time $t_s$ to time $t_1$ shown on Figure 6 is defined to be $T_{top(4T)}$, the interval from time $t_1$ to time $t_2$ is defined to be $T_{off(4T)}$, the interval from time $t_2$ to time $t_3$ is defined to be $T_{mp(4T)}$, the interval from time $t_3$ to time $t_4$ is defined to be $T_{offl(4T)}$, the interval from time $t_4$ to time $t_5$ is defined to be $T_{last(4T)}$, and the interval from time $t_5$ to time $t_6$ is defined to be $T_{cl(4T)}$, $T_{top(4T)}$ and $T_{last(4T)}$ are set to about 0.4T, $T_{mp(4T)}$ is set to about 0.3T, $T_{off(4T)}$ is set to 1- $T_{nxt}$ and $T_{cl(3T)}$ is set to about 1.4T. $T_{nxt}$ is the width of a following pulse and if $T_{nxt}$ is equal to $T_{mp}$, $T_{off}$ becomes equal to 0.7 and if $T_{nxt}$ is equal to $T_{last}$, $T_{off}$ becomes equal to 0.6.

During the intervals $T_{top(4T)}$, $T_{off(4T)}$, $T_{mp}$, $T_{off(4T)}$ and $T_{last(4T)}$ (the heating intervals), the recording layer 14 of the optical recording medium 1 receives a large amount of energy and its temperature exceeds the melting point, and during the interval $T_{cl(4T)}$ (the cooling interval), the recording layer 14 of the optical recording medium 1 is rapidly cooled. Thereby, a recording mark of a length corresponding to 4T is formed in the recording layer 14 of the optical recording medium 1.

As shown in Figure 6, in the case of forming a recording mark of a length corresponding to 4T, the recording strategy includes three pulses and these are defined to be a top pulse, an intermediate pulse and a last pulse. The level of the recording power of the top pulse is set to $Pw2$ during the interval $T_{top}$ slightly lower than the recording power $Pw1$ of the intermediate pulse. It is preferable for the ratio of $Pw2/Pw1$ to be smaller than 0.9. Similarly, the level of the recording power of the last pulse is set to $Pw2$ during the interval $T_{last}$ slightly lower than the recording power $Pw1$ of the intermediate pulse. It is also preferable for the ratio of $Pw2/Pw1$ to be smaller than 0.9. The recording power of the intermediate pulse is set so that a recording mark can be formed in a desired manner even when the influence of thermal interference between itself and neighboring recording marks is low.

The cooling interval $T_{cl}$ is defined as the width of a cooling pulse and is set to be slightly longer than $T_{top}$. The cooling interval $T_{cl}$ is preferably set to be equal to or longer than 1.0 T.

Thus, since the recording powers of the top pulse and the last pulse are set to be lower than that of the intermediate pulse and the width of the cooling pulse is set to be wider than that of the pulse whose power is set to the recording power, the influence of thermal interference between itself and neighboring recording marks can be reduced and high density recording and high data transfer rate can be achieved.

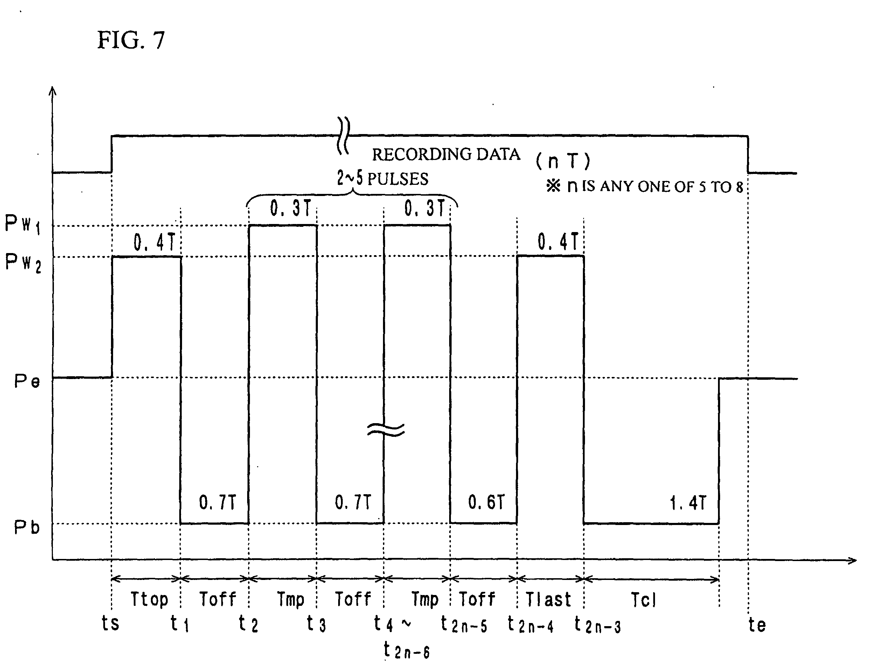

Figure 7 is a diagram illustrating the recording strategy in the case of forming a recording mark of a length corresponding to any one of $5T$ to $8T$. As shown in Figure 7, when forming a recording mark of a length corresponding to $5T$, the number of pulses in the laser beam is set to 4. More specifically, during the period from the time $t_s$ to the time $t_e$, the set consisting of the combination of the laser beam power being first set to $Pw1$ or $Pw2$ and then being set to the power $Pb$ is repeated four times. There are two intermediate pulses of the power $Pw2$ between the top pulse and the last pulse whose powers are set to $Pw1$.

Similarly, when forming a recording mark of a length corresponding to $6T$, the number of pulses in the laser beam is set to **5** and there are three intermediate pulses of the power $Pw2$ between the top pulse and the last pulse whose powers are set to $Pw1$. When forming a recording mark of a length corresponding to $7T$, the number of pulses in the laser beam is set to **6** and there are four intermediate pulses of the power $Pw2$ between the top pulse and the last pulse whose powers are set to $Pw1$. When forming a recording mark of a length corresponding to $8T$, the number of pulses in the laser beam is set to **7** and there are five intermediate pulses of the power $Pw2$ between the top pulse and the last pulse whose powers are set to $Pw1$.

Here, the laser beam power before the time $t_s$ is set to $Pe$ and the power of the laser beam begins to rise at the time $t_s$. In addition, the laser beam power at the time $t_e$ is set to $Pe$ or $Pb$.

Here, when the interval from time $t_s$ to time $t_1$ shown on Figure 7 is defined to be $T_{top(5T-8T)}$, the interval from time $t_1$ to time $t_2$ is defined to be $T_{off(5T-8T)}$, the interval from time $t_2$ to time $t_3$ is defined to be $T_{mp(5T)}$, and the interval from time $t_3$ to time $t_4$ is defined to be $T_{offl(5T)}$. $T_{mp(5T)}$ and $T_{off(5T)}$ are repeated until time $t_{2n-4}$. When forming a recording mark of a length corresponding to $8T$ namely, when $n$ is equal to 8, $T_{mp(5T)}$ and $T_{off(5T)}$ are repeated four times until time $t_{12}$. Further, when the interval from time $t_{2n-4}$ to time $t_{2n-3}$ is defined to be $T_{last(5T-8T)}$ and the interval from time $t_{2n-3}$ to time $t_e$ is defined to be $T_{cl(5T-8T)}$, $T_{top(5T)}$, $T_{mp(5T)}$ and $T_{last(5T)}$ are set to about $0.4T$, $T_{off(5T)}$ is set to about $0.3T$, and $T_{cl(3T)}$ is set to about $1.4T$. $T_{nxt}$ is the width of a following pulse and if $T_{nxt}$ is equal to $T_{mp}$, $T_{off}$ becomes equal to 0.7 and if $T_{nxt}$ is equal to $T_{last}$, $T_{off}$ becomes equal to 0.6.

During the intervals $T_{top(5T-8T)}$ to $T_{last(5T)}$ (the heating intervals), the recording layer 14 of the optical recording medium 1 receives a large amount of energy and its temperature exceeds the melting point, and during the interval $T_{cl(5T)}$ (the cooling interval), the recording layer 14 of the optical recording medium 1 is rapidly cooled. Thereby, a recording mark of a length corresponding to $5T$ is formed in the recording layer 14 of the optical recording medium 1.

As shown in Figure 7, in the case of forming a recording mark of a length corresponding to $5T$ to 8T, the recording strategy includes four to seven pulses and these are defined to be a top pulse, intermediate pulses and a last pulse. The level of the recording power of the top pulse is set to $Pw2$ during the interval $T_{top}$ slightly lower than the recording power $Pw1$ of any of the intermediate pulses. It is preferable for the ratio of $Pw2/Pw1$ to be smaller than 0.9. Similarly, the level of the recording power of the last pulse is set to $Pw2$ during the interval $T_{last}$ slightly lower than the recording power $Pw1$ of any of the intermediate pulses. It is also preferable for the ratio of $Pw2/Pw1$ to be smaller than 0.9. The recording power of any of the intermediate pulses is set to a power so that a recording mark can be formed in a desired manner even when the influence of thermal interference between itself and neighboring recording marks is low.

The cooling interval $T_{cl}$ is defined as the width of a cooling pulse and is set to be slightly longer than $T_{top}$. The cooling interval $T_{cl}$ is preferably set to be equal to or longer than 1.0 T.

Thus, since the recording powers of the top pulse and the last pulse are set to be lower than that of any of the intermediate pulses and the width of the cooling pulse is set to be wider than that of the pulse whose power is set to the recording power, the influence of thermal interference between itself and neighboring recording marks can be reduced and high density recording and high data transfer rate can be achieved.

**WORKING EXAMPLE**

First, an optical recording medium like that shown in Figure 3 that had a substrate 11 with a thickness of approximately 1.1 mm, a reflective layer 12 with a thickness of 100 nm, a second dielectric layer 13 with a thickness of 20 nm, a recording layer 14 with a thickness of 12 nm, a first dielectric layer 15 with a thickness of 35 nm, and a light transmission layer 16 with a thickness of approximately 100 μm was prepared.

Recording marks of random length corresponding to one of $2T$ to $8T$ were recorded on a predetermined track of the optical recording medium one hundred times using the recording strategy shown in one of Figures 4 to 7 under the conditions shown in Table 1, where the clock frequency $f$ was 132 MHz, the clock period (1T) was 7.6 nsec, the linear recording velocity was 10.5 m/sec, the modulation code was (1,7) RLL, the data transfer rate was 70 Mbps, the channel bit length was

0.12 μm/bit, the numerical aperture of an objective lens was 0.85 and the wavelength of a laser beam was 405 nm.

TABLE 1

| Clock frequency | 132 MHz |
|---|---|
| Clock period (1T) | 7.6 nsec |
| Linear Recording velocity (CLV) | 10.5 m/sec |
| Modulation code | (1,7) RLL |
| Data transfer rate | 70 Mbps |
| Channel bit length | 0.12 μm/bit |
| Numerical Aperture | 0.85 |
| Laser Wavelength | 405 nm |

Then, recording marks of random length corresponding to one of $2T$ to $8T$ in the (1,7) RLL modulation code were formed a hundred times on neighboring tracks on both sides of the track on which the above mentioned recording mark had been formed.

Further, clock jitter of the recording marks first formed on the central track was measured. When clock jitter was measured, the fluctuation $\sigma$ of a reproduced signal was measured using a time interval analyzer and the clock jitter was calculated as $\sigma$/Tw, where Tw was one clock period. The measurement was repeatedly carried out while the recording power $Pw1$ was varied as a parameter. In this experiment, the recording strategy was determined as follows.

$$Pe/Pw1 = 0.5, \; Pw2/Pw1 = 0.77 \text{ and } Pb = 0.5;$$

$$T_{top} = 0.4, \; T_{mp} = 0.3, \; T_{last} = 0.4 \text{ and } T_{cl} = 1.4;$$

and

$$T_{off} = 1 - T_{nxt}$$

Furthermore, as a comparative example, the above mentioned measurement was carried out using a conventional recording strategy. The conventional recording strategy was determined as follows.

$$Pe/Pw = 0.5 \text{ and } Pb = 0.5;$$

$$T_{top} = 0.4, \; T_{mp} = 0.3, \; T_{last} = 0.4 \text{ and } T_{cl} = 0.8;$$

and

$$T_{off} = 1 - T_{nxt}$$

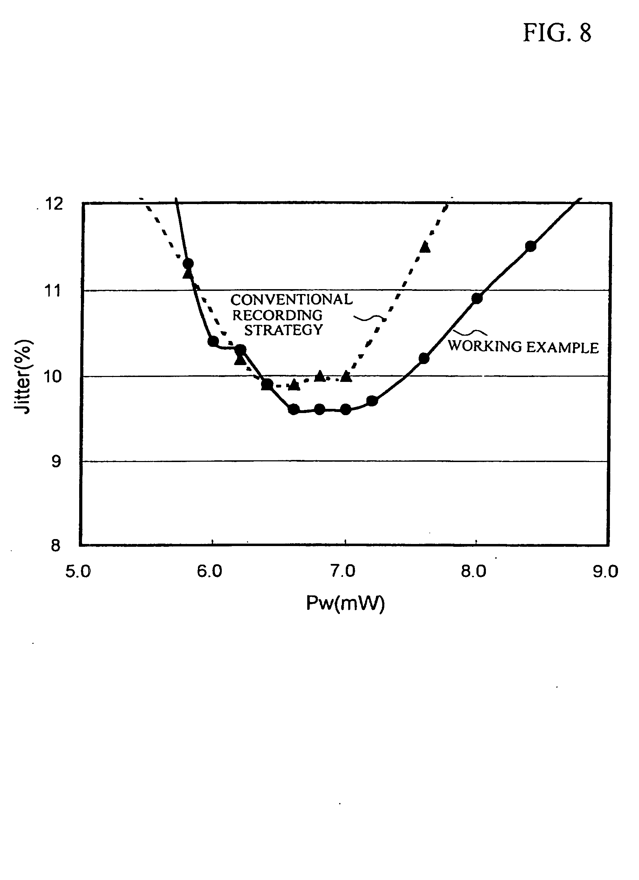

Figure 8 is a graph showing jitter in the case of using the recording strategy according to this working example wherein the abscissa axis indicates the recording power $Pw1$ (mW) of the laser beam (the recording power $Pw$ in the conventional recording strategy) and the ordinate axis indicates jitter (%). In other words, Figure 8 is a graph obtained by measuring jitter when the recording power $Pw1$ was varied from 5.8 mW to 8.4 mW in the case of using the recording strategy according to the present invention and the conventional recording strategy. As shown in Figure 8, it was found that in the case of using the recording strategy according to the present invention, the range of the recording power $Pw1$ in which jitter was equal to or lower than 10 %, for example, was wider than in the case of using the conventional recording strategy and that the power margin was widened. It is reasonable to consider this was because cross erase could be reduced by using the recording strategy according to the present invention even when the recording power $Pw1$ was high.

Measurement was carried out in a similar manner to the above except that $Pe$ was varied as a parameter instead of $Pw1$. More specifically, an optical recording medium like that shown in Figure 3 that had a substrate 11 with a thickness of approximately 1.1 mm, a reflective layer 12 with a thickness of 100 nm, a second dielectric layer 13 with a thickness of 20 nm, a recording layer 14 with a thickness of 12 nm, a first dielectric layer 15 with a thickness of 35 nm, and a light transmission layer 16 with a thickness of approximately 100 μm was first prepared.

Recording marks of random length corresponding to one of $2T$ to $8T$ were recorded on a predetermined track of the optical recording medium one hundred times using the recording strategy shown in one of Figures 4 to 7 under the conditions shown in Table 1.

Then, recording marks of random length corresponding to one of $2T$ to $8T$ in the (1,7) RLL modulation code were formed a hundred times on neighboring tracks on both sides of the track on which the above mentioned recording mark had been formed.

Further, clock jitter of the recording marks first formed on the central track was measured. When clock jitter was measured, the fluctuation $\sigma$ of a reproduced signal was measured using a time interval analyzer and the clock jitter was calculated as $\sigma$/Tw, where Tw was one clock period. The measurement was repeatedly carried out while the recording power $Pe$ was varied as a parameter. In this experiment, the recording strategy was determined as follows.

$$Pw1 = 6.6, \; Pw2 = 5.1 \text{ and } Pb = 0.5;$$

$$T_{top} = 0.4, T_{mp} = 0.3, T_{last} = 0.4 \text{ and } T_{cl} = 1.4;$$

and

$$T_{off} = 1 - T_{nxt}$$

Furthermore, as a comparative example, the above mentioned measurement was carried out using a conventional recording strategy. The conventional recording strategy was determined as follows.

$$Pw = 6.6 \text{ and } Pb = 0.5;$$

$$T_{top} = 0.4, T_{mp} = 0.3, T_{last} = 0.4 \text{ and } T_{cl} = 0.8;$$

and

$$T_{off} = 1 - T_{nxt}$$

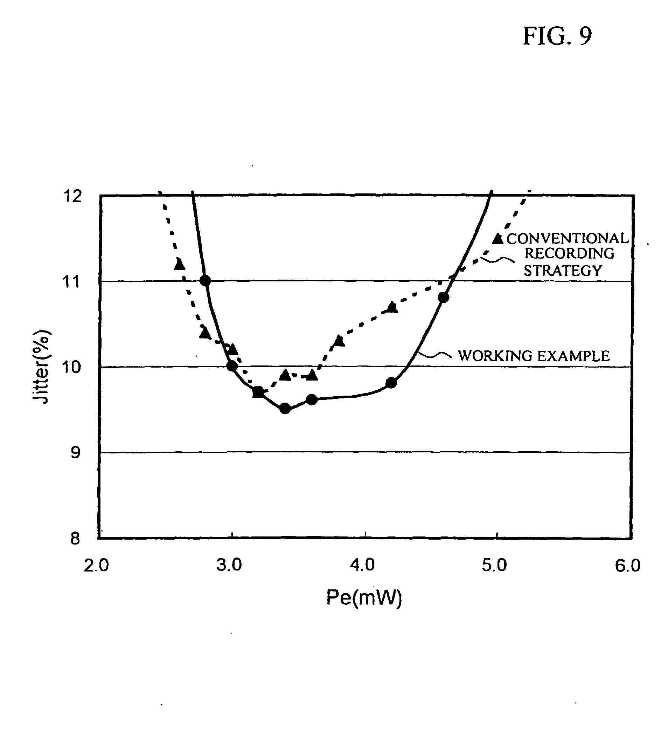

Figure 9 is a graph showing jitter in the case of using the recording strategy according to this working example wherein the abscissa axis indicates the erasing power $Pe$ (mW) of the laser beam and the ordinate axis indicates jitter (%). In other words, Figure 9 shows a graph obtained by measuring jitter when the erasing power $Pe$ was varied from 2.8 mW to 5.0 mW in the case of using the recording strategy according to the present invention and the conventional recording strategy. As shown in Figure 9, it was found that in the case of using the recording strategy according to the present invention, the range of the erasing power $Pe$ in which jitter was equal to or lower than 10 %, for example, was wider than in the case of using the conventional recording strategy and that the power margin was widened. It is reasonable to consider this was because the influence of thermal interference could be reduced by using the recording strategy according to the present invention even when the erasing power $Pe$ was high.

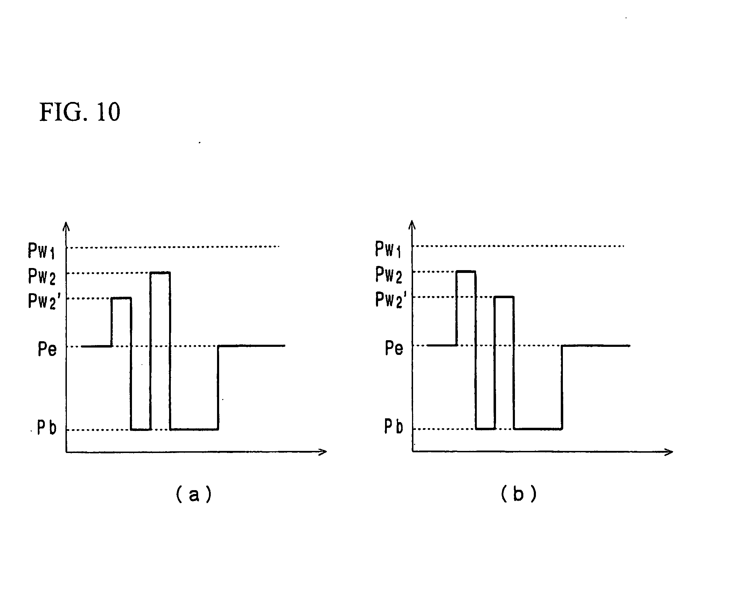

Figures 10(a) and (b) are diagrams illustrating a recording strategy which is another preferred embodiment of the present invention and shows a modification of the recording strategy shown in Figure 5 in the case of forming recording marks of a length corresponding to $3T$. As shown Figure 10, in this embodiment, the recording powers of a top pulse and a last pulse are set different from each other and each of them is set to $Pw2$ or $Pw2'$. The recording power of the top pulse may be set to be lower than that of the last pulse (Figure 10(a)) or the recording power of the last pulse may be set to be lower than that of the top pulse (Figure 10(b)). In each case, it is preferable for $Pw2/Pw1$ to be smaller than 0.9 and $Pw2'/Pw1$ to be smaller than 0.9. Here, although this embodiment was explained as to the case of forming recording marks of a length corresponding to $3T$, this embodiment is not limited to such a case and can be applied to any case of forming recording marks of a length corresponding to any one of $3T$ to $8T$.

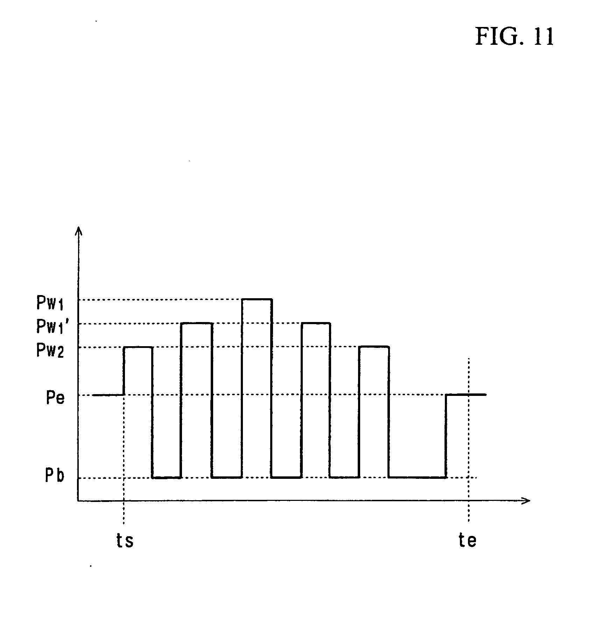

Figure 11 is a diagram illustrating a recording strategy which is a further preferred embodiment of the present invention and shows a modification of the recording strategy in the case of forming recording marks of a length corresponding to $6T$. In this embodiment, the recording powers $Pw1$ of a plurality of intermediate pulses are not set to be equal to each other but set to be different from each other. For example, as shown in Figure 11, the recording powers of second and fourth intermediate pulses are set to $Pw1'$ and the recording power of a third intermediate pulse is set to $Pw1$ higher than $Pw1'$. Here, it is preferable for $Pw1$ and $Pw1'$ to satisfy the conditions of $Pw2/Pw1$ being smaller than 0.9 and $Pw2/Pw1'$ being smaller than 0.9.

The present invention is in no way limited to the aforementioned embodiment, but rather various modifications are possible within the scope of the invention as recited in the claims, and these are naturally included within the scope of the invention.

For example, in the above described embodiments, although the width of the cooling pulse is set to $1.4T$, it is not absolutely necessary to set the width of the cooling pulse to $1.4\ T$ and it is possible to considerably reduce the thermal influence from neighboring recording marks if the width of the cooling pulse is set to be equal to or wider than $1.0\ T$.

Further, in the above described embodiments, although the explanation was made as to the case where the shortest signal interval was equal to or shorter than 20 ns at which the thermal influence from neighboring recording marks became particularly great, the present invention is not limited to such a case and according to the present invention, it is possible to reduce the thermal influence from neighboring recording marks insofar as the shortest signal interval is equal to or shorter than about 30 ns.

Furthermore, in the above described embodiments, although the first recording power $Pw1$ and the second recording power $Pw2$ are set so that the ratio $Pw2/Pw1$ is smaller than 0.9, it is not absolutely necessary to set the first recording power $Pw1$ and the second recording power $Pw2$ in this manner and in the case where the first recording power $Pw1$ and the second recording power $Pw2$ are set so that the ratio $Pw2/Pw1$ is smaller than 1.0, a cooling effect can be obtained and it is possible to reduce the thermal influence from neighboring recording marks. Further, cross-erase of information recorded on neighboring tracks can be reduced.

Moreover, in the above described embodiments, although the recording powers of the top pulse and the last pulse are set at the same level, it is not absolutely necessary to set the recording powers of the top pulse and the last pulse in this manner and it is possible to set the recording power of the top pulse to be higher than that of the last pulse or the recording power of the top pulse to be higher than that of the last pulse insofar as the recording power of the top pulse does not exceed the recording power of any of the intermediate pulses.

Further, in the above described embodiments, although $Pw2/Pw1$ is set independently of the lengths of preceding space and following space, it is not absolutely necessary to set $Pw2/Pw1$ in this manner and $Pw2/Pw1$ may be set depending upon the lengths of preceding space and following space. In this case, $Pw2/Pw1$ can be set smaller as the lengths of preceding space and following space are shorter and $Pw2/Pw1$ can be set larger as the lengths of preceding space and following space are longer.

Furthermore, in the above described embodiments, the number of pulses of the laser beam was set to 1, 2, 3, 4, 5, 6 and 7 when forming recording marks with lengths corresponding to $2T$, $3T$, $4T$, $5T$, $6T$, $7T$ and $8T$, respectively. However, the recording strategy according to the present invention is not limited thereto and a different recording strategy may be adopted. Moreover, the present invention is not limited to the case of forming recording marks with lengths corresponding to $2T$ to $8T$ in the (1,7) RLL modulation code but can be applied to a case of forming recording marks with lengths corresponding to $3T$ to $11T$ and $14T$ in the 8.16 RLL modulation code.

In addition, while the optical recording medium 1 shown in Figure 3 is given as an example of a suitable optical recording medium for the application of the method of recording information to an optical recording medium according to the present embodiment, the information recording method according to the present invention is not limited in being applicable only to this optical recording medium, but rather it is applicable to any kind of optical recording medium so long as it is a recordable optical recording medium.

**Claims**

1. A method of recording information to an optical recording medium to which information is recorded by projecting a pulse-modulated laser beam onto the optical recording medium and forming on the optical recording medium a plurality of recording marks selected from a group consisting of several types of recording marks each with different lengths, wherein: the method of recording information to an optical recording medium comprises a step of setting recording powers of a top pulse and/or a last pulse of a laser beam used for forming at least one recording mark contained within said group to a second recording power lower than a first recording power which is a recording power of an intermediate pulse(s) between the top pulse and the last pulse, thereby recording information in the optical recording medium.

2. A method of recording information to an optical recording medium in accordance with Claim 1, wherein the recording powers of the top pulse and the last pulse are set at the same level.

3. A method of recording information to an optical recording medium in accordance with Claim 1, wherein the first recording power $Pw1$ and the second recording power $Pw2$ are set so that $Pw2/Pw1$ is smaller than 0.9.

4. A method of recording information to an optical recording medium in accordance with Claim 2, wherein the first recording power $Pw1$ and the second recording power $Pw2$ are set so that $Pw2/Pw1$ is smaller than 0.9.

5. A method of recording information to an optical recording medium in accordance with Claim 1, wherein a pulse width of a cooling pulse of the laser beam used for forming at least one recording mark contained within said group is set to wider than that of any pulse of the recording power.

6. A method of recording information to an optical recording medium in accordance with Claim 2, wherein a pulse width of a cooling pulse of the laser beam used for forming at least one recording mark contained within said group is set to wider than that of any pulse of the recording power.

7. A method of recording information to an optical recording medium in accordance with Claim 3, wherein a pulse width of a cooling pulse of the laser beam used for forming at least one recording mark contained within said group is set to wider than that of any pulse of the recording power.

8. A method of recording information to an optical recording medium in accordance with Claim 4, wherein a pulse width of a cooling pulse of the laser beam used for forming at least one recording mark contained within said group is set to wider than that of any pulse of the recording power.

9. A method of recording information to an optical recording medium in accordance with Claim 8, wherein the pulse width of the cooling pulse is set to be equal to or wider than 1.0 T.

10. A method of recording information to an optical recording medium in accordance with Claim 9, wherein a length of a shortest signal between neighboring recording marks is equal to or shorter than 30 ns.

11. A method of recording information to an optical recording medium in accordance with Claim 10, wherein the length of the shortest signal between neighboring recording marks is equal to or shorter than 20 ns.

12. An optical recording medium comprising at least a recording layer to which information is recorded by projecting a pulse-modulated laser beam thereonto and forming thereon a plurality of recording marks selected from a group consisting of several types of recording marks each with different lengths, wherein: the optical recording medium comprises information required to set recording powers of a top pulse and/or a last pulse of a laser beam used for forming at least one recording mark contained within said group to a second recording power lower than a first recording power which is a recording power of an intermediate pulse(s) between the top pulse and the last pulse and record the information therein.

13. An optical recording medium in accordance with Claim 12, which further comprises information required to set the recording powers of the top pulse and the last pulse at the same level and record the information therein.

14. An optical recording medium in accordance with Claim 12, which further comprises information required to set the first recording power $Pw1$ and the second recording power $Pw2$ so that $Pw2/Pw1$ is smaller than 0.9.

15. An optical recording medium in accordance with Claim 13, which further comprises information required to set the first recording power $Pw1$ and the second recording power $Pw2$ so that $Pw2/Pw1$ is smaller than 0.9.

16. An information recording and reproducing apparatus that records information by projecting a pulse-modulated laser beam onto an optical recording medium and forming on the optical recording medium a plurality of recording marks selected from a group consisting of several types of recording marks each with different lengths, thereby recording information in the optical recording medium wherein: the information recording and reproducing apparatus comprises at least optical means for projecting the laser beam onto the optical recording medium and laser drive means for supplying a laser drive signal for controlling the laser beam, the laser drive means being adapted to supply a laser drive signal to set recording powers of a top pulse and/or a last pulse of a laser beam used for forming at least one recording mark contained within said group to a second recording power lower than a first recording power which is a recording power of an intermediate pulse(s) between the top pulse and the last pulse.

17. An information recording and reproducing apparatus in accordance with Claim 16, wherein the recording powers of the top pulse and the last pulse are set at the same level.

18. An information recording and reproducing apparatus in accordance with Claim 16, wherein the first recording power $Pw1$ and the second recording power $Pw2$ are set so that $Pw2/Pw1$ is smaller than 0.9.

19. An information recording and reproducing apparatus in accordance with Claim 17, wherein the first recording power $Pw1$ and the second recording power $Pw2$ are set so that $Pw2/Pw1$ is smaller than 0.9.

FIG. 1

EP 1 467 353 A1

FIG. 2

INSERT A DISK — S1

ROTATE A DISK /
PROJECT A
LASER BEAM — S2

MOVE A HEAD TO
ITS HOME POSITION — S3

FOCUS SEARCHING — S4

SET FOCUSING
GAIN — S5

FOCUSING ON — S6

MEASURE AMPLITUDE
OF A TRACKING
ERROR SIGNAL — S7

SET TRACKING
GAIN — S8

TRACKING ON — S9

INITIAL SETTING — S10

STANDBY — S11

FIG. 3

LASER BEAM                                  1

16
15
14
13
12

11

17

FIG. 4

FIG. 5

FIG. 6

EP 1 467 353 A1

FIG. 7

RECORDING DATA (nT)
2~5 PULSES
※ n IS ANY ONE OF 5 TO 8

$Pw_1$
$Pw_2$
$Pe$
$Pb$

0.4T  0.3T  0.3T  0.4T

0.7T  0.7T  0.6T  1.4T

Ttop  Toff  Tmp  Toff  Tmp  Toff  Tlast  Tcl

ts  $t_1$  $t_2$  $t_3$  $t_4$~  $t_{2n-5}$  $t_{2n-4}$  $t_{2n-3}$  te
$t_{2n-6}$

FIG. 8

FIG. 9

FIG. 10

(a)

(b)

EP 1 467 353 A1

FIG. 11

FIG. 12

(a)

(b)

EP 1 467 353 A1

## INTERNATIONAL SEARCH REPORT

| | International application No. |
|---|---|
| | PCT/JP03/00180 |

| A. CLASSIFICATION OF SUBJECT MATTER |
|---|
| Int.Cl$^7$ G11B7/0045 |

According to International Patent Classification (IPC) or to both national classification and IPC

| B. FIELDS SEARCHED |
|---|

Minimum documentation searched (classification system followed by classification symbols)
Int.Cl$^7$ G11B7/00-7/013, 7/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 09-134525 A (Ricoh Co., Ltd.), 20 May, 1997 (20.05.97), Full text; Fig. 8 & US 5732062 A | 1,12,16 |

☐ Further documents are listed in the continuation of Box C.   ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| Date of the actual completion of the international search <br> 17 April, 2003 (17.04.03) | Date of mailing of the international search report <br> 30 April, 2003 (30.04.03) |
| Name and mailing address of the ISA/ <br> Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/00180

Continuation of Box No.II of continuation of first sheet(1)

The inventions of claims 1, 2, 16 are publicly known since it is disclosed in JP 9-134525 A. Therefore the technical feature common to claims 1, 12, 16 cannot be a special technical feature. The inventions of claims 2, 13, 17, claims 3, 4, 14, 15, 18, 19, and claims 5-11 solve another problem by adding a further technical limitation. Consequently claims 1, 12, 16, claims 2, 13, 17, claims 3, 4, 14, 15, 18, 19, and claims 5-11 lack the unity of invention.

Therefore, there are four inventions in this international application as follows:
The invention of claims 1, 12, 16
The invention of claims 2, 13, 17
The invention of claims 3, 4, 14, 15, 18, 19
The invention of claims 5-11
They do not satisfy the requirement of unity of invention.

Form PCT/ISA/210 (extra sheet) (July 1998)

**INTERNATIONAL SEARCH REPORT**

International application No.

PCT/JP03/00180

---

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

---

**Box II    Observations where unity of invention is lacking (Continuation of item 3 of first sheet)**

This International Searching Authority found multiple inventions in this international application, as follows:

   (see extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

---

Form PCT/ISA/210 (continuation of first sheet (1)) (July 1998)